# EUROPEAN PATENT SPECIFICATION

(11) **EP 3 105 960 B1**
(45) Date of publication and mention of the grant of the patent: **05.06.2019**
(21) Application number: 14707483.5
(22) Date of filing: 14.02.2014
(51) Int. Cl.: H04W 36/00, H04W 36/32, H04W 48/04, H04W 48/12, H04W 84/04

(54) **WIRELESS DEVICE AND METHOD FOR MANAGING MEASUREMENT OF REFERENCE SIGNALS**
DRAHTLOSVORRICHTUNG UND VERFAHREN ZUR VERWALTUNG DER MESSUNG VON REFERENZSIGNALEN
DISPOSITIF SANS FIL ET PROCÉDÉ POUR GÉRER UNE MESURE DE SIGNAUX DE RÉFÉRENCE

(43) Date of publication of application: 21.12.2016
(73) Proprietor: Telefonaktiebolaget LM Ericsson (publ), 164 83 Stockholm (SE)
(72) Inventor: YAMINE, Badawi, Beirut 5534 (LB); TEYEB, Oumer, SE-177 44 Solna (SE); CENTONZA, Angelo, Hampshire SO225BA (GB)
(74) Representative: Brann AB
(86) International application number: PCT/SE2014/050182
(87) International publication number: WO 2015/122812

(56) References cited:
- EP-A1- 2 071 881
- WO-A1-2011/123006
- WO-A1-2013/023849
- US-A1- 2010 190 496
- US-A1- 2014 038 597
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.0.0, 7 January 2014 (2014-01-07), pages 1-349, XP050729407, [retrieved on 2014-01-07]
- "3rd Generation Partnership Project; Technical Specification Group Radio Access Network; Evolved Universal Terrestrial Radio Access (E-UTRA); Physical layer; Measurements (Release 11)", 3GPP STANDARD; 3GPP TS 36.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 15 December 2012 (2012-12-15), pages 1-14, XP050691178, [retrieved on 2012-12-15]
- "3rd Generation Partnership Project; Technical Specification Group Radio Access Network; Evolved Universal Terrestrial Radio Access (E-UTRA); Physical channels and modulation (Release 12)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 14 December 2013 (2013-12-14), pages 1-120, XP050729027, [retrieved on 2013-12-14]
- "3rd Generation Partnership Project; Technical Specification Group Radio Access Network; Evolved Universal Terrestrial Radio Access (E-UTRA); User Equipment (UE) procedures in idle mode (Release 11)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.6.0, 2 January 2014 (2014-01-02), pages 1-34, XP050729346, [retrieved on 2014-01-02]

## Description

### TECHNICAL FIELD

Embodiments herein relate to wireless communication systems, such as telecommunication systems. A method and a wireless device for managing a measurement of a strength of a reference signal as well as method and a radio network node for enabling the wireless device to manage the measurement of the reference signal are disclosed. Moreover, corresponding computer programs and computer program products are disclosed.

### BACKGROUND

Within a telecommunication system, it is often desired to improve coverage and data rates. One way of achieving this is to deploy so called femto cells in the telecommunication system.

A femto cell, is a sort of a pico Radio Base Stations (RBS) with very low transmit power, e.g. 20 dBm according to Third Generation Partnership Project (3GPP) specifications, and a coverage of few meters, such as 10-15 meters. In 3GPP for Long Term Evolution (LTE), the femto cell is referred to as Home evolved Node B (HeNB) and for Universal Mobile Telecommunications System (UMTS), the femto cell is referred to as Home Node B (HNB).

A purpose of the HeNB is to overcome the poor indoor coverage of macro base stations and to offload the macro from additional traffic load. Without HeNB, an operator has to deploy more macro base stations. But that alternative is very costly, it also creates additional interference, and it is slow to deploy. Not to forget that a User Equipment (UE), located indoors, has to increase its transmit power in order to overcome indoor propagation losses while connected to the macro base station. The increased transmit power would consequently increase power consumption of the user equipment. Disadvantageously, a battery for powering of the user equipment would have to be charged more often due to the increased power consumption.

Therefore, HeNB deployment is useful for subscribers, or users, thanks to avoidance of increased transmit power as well as for the operator thanks to less costly deployment as compared to macro radio base stations. In order to encourage the use of HeNBs, the operator may give the subscribers reduce calls tariff while using the HeNB.

The macro base station, e.g. operating a macro cell, is accessible, i.e. open, to all subscribers. In contrast thereto, access to the HeNB, e.g. operating one or more HeNB cells:
- could be open for all subscribers,
- could be restricted to some subscribers also called Closed Subscriber Group (CSG), e.g. resident of the property where HeNB is installed, or
- could be hybrid, that is used by all users and CSG but maybe giving reduce call tariff for CSG subscribers.

Every HeNB is given a unique Evolved Cell Global Identity (ECGI). However, before reading that ECGI, based on a request by the eNB, a UE performs radio signal measurements on what is called a Physical Cell Identity (PCI) which identifies different LTE cells at the physical layer.

With the deployment of HeNB with CSG access, referred to as HeNB CSG, it is unnecessary for a UE being a member of one particular CSG to perform measurements on every HeNB that it encounters on its path of movement. A reason for this is that most HeNB are HeNB with CSG access. Thus, it is unlikely that the encountered HeNB is one with a CSG that the UE is a member of.

In prior art, as mentioned in US20130084892, whenever HeNB and macro evolved Node B (eNB) use the same frequency, one way of preventing the wireless device from measuring other HeNB CSG than its own HeNB CSG, is to blacklist the PCI used by its own HeNB CSG until it is geographically closed to his own HeNB CSG. According to a method in US20130084892 mentioned directly above, a wireless device obtains a fingerprint of its own HeNB CSG, e.g. its CSG cell. Thereby, the wireless device is able to determine when it is in the proximity of its own HeNB CSG. Thus, allowing the wireless device to measure on the blacklisted PCI when the wireless device is in the proximity of its own HeNB CSG.

Furthermore, US2013109380 discloses a method of operating a radio access network. According to the method neighbour cell information identifying neighbor cells of a source cell and respective neighbour scrambling codes of the neighbour cells are provided. A report may be received from a wireless terminal through the source cell with the report identifying a reported scrambling code of a reported cell and at least one detected scrambling code of at least one detected cell other than the reported cell. One of the neighbour cells may be selected as a target cell based on the reported scrambling code, the at least one detected scrambling code, and the neighbour cell information.

Moreover, US2013084870 discloses a method in a first network node for handling handover of a user equipment from a source cell to a target cell in a communication network. The first network node selects the target cell from neighbour cells based on information of cell size, which target cell will be used for handover the user equipment to.

In a known LTE system, there are only different 504 PCIs available for use. As the number of HeNB and macro eNB cells exceeds 504 cells, the reuse of the same PCI becomes a very likely choice, if not a necessary choice. One way to prevent a UE from measuring CSG cells with the same PCI of an accessible CSG cell is to blacklist the PCI of the accessible CSG cell as soon as the UE moves away from this cell e.g. according the above mentioned document. However, by black-listing the PCI of one CSG HeNB while the UE is driving away from the CSG cell, there is a chance that the UE encounters the same PCI used either by a macro eNB or by another CSG HeNB. As the PCI is blacklisted, the UE will not measure it and as a consequence a handover towards a possibly allowed better, e.g. in terms of signal strength or the like, cell represented by the blacklisted PCI is blocked. A disadvantage may be that the UE may experience a degraded signal quality and maybe a service interruption, or failure, such as a call drop.

Even in cases where the range of PCIs of closed access cells is broadcast, i.e. there is a fixed allocation of PCIs, i.e. a range of reserved PCIs, that can be used only for closed access cells, a problem is that it is not possible for the UE to know the range of reserved PCIs in Radio Access Network (RAN) sharing scenarios. Note that broadcasting of a range of reserved PCIs for closed access cells is specified in 3GPP 36.331 and 3GPP 25.331.

Namely, each Public Land Mobile Network (PLMN), belonging to a certain RAN, might have its own set of reserved PCIs for closed access cells, but the UE is only informed about the range of reserved PCIs in the serving PLMN. If a UE encounters a target cell that is accessible in a PLMN different from the serving PLMN, then the UE will not know if there is a range of reserved PCIs for closed access cells in that target PLMN. Hence, it is not possible for the UE to determine if PCI reuse between macro and other cell types occurs.

EP 2071 88 A1 discloses a method and a device suggested for providing and/or processing handover information by a network, wherein the network provides information of at least one base station to a mobile terminal, wherein said at least one base station can be subject to a handover for the mobile terminal, wherein the information comprises information regarding at least one femto base station and wherein the handover information is provided separately for each mobile terminal.

US 2010/190496 A1 discloses a method and system for neighbor list generation in a femtocell environment based on access permissions of user device at neighboring femto access points (FAP). The method of accessing a network comprises a femto gateway determining location of a user device, using the femto access points as reference, femto gateway creating a list of neighboring femto access points the user device is authorized to access, femto gateway sending the neighbor list to a femto access point, where the user device is camped on the fernto access point, femto access point sending the list to the user device, user device scanning femto access points in the list and the user device requesting access to a femto access point from the list, if needed.

WO 2013/023849 A1 discloses a method which includes connecting to a macro cell of a communications network, sending an enquiry from a control node of the macro cell to a control node of a femto cell under coverage of the macro cell enquiring which femto cells under coverage of the macro cell are allowed to be accessed, and providing information regarding the cells under coverage of the macro cell that are allowed to be accessed.

### SUMMARY

An object is alleviate, or at least reduce, some of the above mentioned problems and/or disadvantages.

According to a first aspect, the object is achieved by a method, performed by a wireless device connected to or camping on a first cell, for managing a measurement of a strength of a reference signal. The first cell is operated by a radio network node. The wireless device receives, from the radio network node, an indication relating to a property associated with an identity of a second cell neighbouring to the first cell. Moreover, the wireless device receives the identity of the second cell. Furthermore, the wireless device determines whether or not to measure the strength of the reference signal identified by the identity of the second cell as follows:
if the identity of the second cell is associated to a type of a cell equal to a macro cell then perform the measurement on the second cell,
if the identity of the second cell is associated to a type of a cell equal to a closed or a hybrid Closed Subscriber Group, CSG, cell for which the wireless device is a member then perform the measurement on the second cell, or
if the identity of the second cell is associated to a type of a cell equal to a closed or a hybrid Closed Subscriber Group, CSG, cell for which the wireless device is not a member then not perform the measurement on the second cell.

According to a second aspect, the object is achieved by a wireless device connected to or camping on a first cell, configured to manage a measurement of a strength of a reference signal. The first cell is configured to be operated by a radio network node. The wireless device is configured to receive an identity of a second cell neighbouring to the first cell; and to receive, from the radio network node, an indication relating to a property associated with the identity of the second cell. Furthermore, the wireless device is configured to determine whether or not to measure the strength of the reference signal identified by the identity of the second cell as follows:
if the identity of the second cell is associated to a type of a cell equal to a macro cell then perform the measurement on the second cell,
if the identity of the second cell is associated to a type of a cell equal to a closed or a hybrid Closed Subscriber Group, CSG, cell for which the wireless device is a member then perform the measurement on the second cell, or
if the identity of the second cell is associated to a type of a cell equal to a closed or a hybrid Closed Subscriber Group, CSG, cell for which the wireless device is not a member then not perform the measurement on the second cell.

According to further aspects, the object is achieved by computer programs and computer program products corresponding to the aspects above.

Thus, according to the embodiments herein, undue measuring of the strength of the reference signal is prevented thanks to that the measuring is performed only when indicated by the property, e.g. as indicated by the indication relating to the property. Consequently, unnecessary processing in the wireless device as well as in the radio network node is avoided. As a result, the above mentioned object is achieved.

According to some first embodiments herein, the property relates to accessibility of the second cell. Then, the measuring of the strength of the reference signal is performed only when the property indicates that the second cell is accessible by the wireless device. As an example, the second cell is accessible when the second cell is a so called macro cell, when the second cell is a CSG cell with which the wireless device has a membership or the like. Hence, any other CSG cells, with which the wireless device does not have a membership, may not be measured by the wireless device.

According to some second embodiments, the property relates to a size of the second cell. Then, the measuring of the strength of the reference signal is performed only when the size of the second cell is smaller than a threshold value for size of cell and when the wireless device is in a high mobility state. Hence, for any second cell of small size, the wireless device does not perform any measurement when the wireless device is in high mobility state, since such any second cell of small size would anyway most probably be left, shortly after access is made or attempted, by the wireless device due to its high mobility state.

Advantageously, less radio measurements, such as the measuring of the strength of the reference signal, are performed according to embodiments herein. Thus, power and processing consumption in the wireless device is reduced.

Moreover, the radio network node is relieved from processing of measurement reports from the wireless device, since the wireless device performs and sends measurements reports only when indicated by the indication relating to the property of the second cell.

As a consequence of above, embodiments herein may accelerate procedures, performed by the wireless device and the radio network node, relating to measurements, processing and signalling exchange there between in connection with handover and/or cell reselection.

### BRIEF DESCRIPTION OF THE DRAWINGS

The various aspects of embodiments disclosed herein, including particular features and advantages thereof, will be readily understood from the following detailed description and the accompanying drawings, in which:
Figure 1 is a schematic overview of an exemplifying wireless communication system in which embodiments herein may be implemented,
Figure 2 is a schematic, combined signalling scheme and flowchart illustrating embodiments of the methods when performed in the wireless communication system according to Figure 1,
Figure 3 is a flowchart illustrating the first embodiments,
Figure 4 is a flowchart illustrating the second embodiments,
Figure 5 is a flowchart illustrating embodiments of the method in the wireless device,
Figure 6 is a block diagram illustrating embodiments of the wireless device,
Figure 7 is a flowchart illustrating embodiments of the method in the radio network node, and
Figure 8 is a block diagram illustrating embodiments of the radio network node.

### DETAILED DESCRIPTION

Throughout the following description similar reference numerals have been used to denote similar elements, units, modules, circuits, nodes, parts, items or features, when applicable. In the Figures, features that appear in some embodiments are indicated by dashed lines.

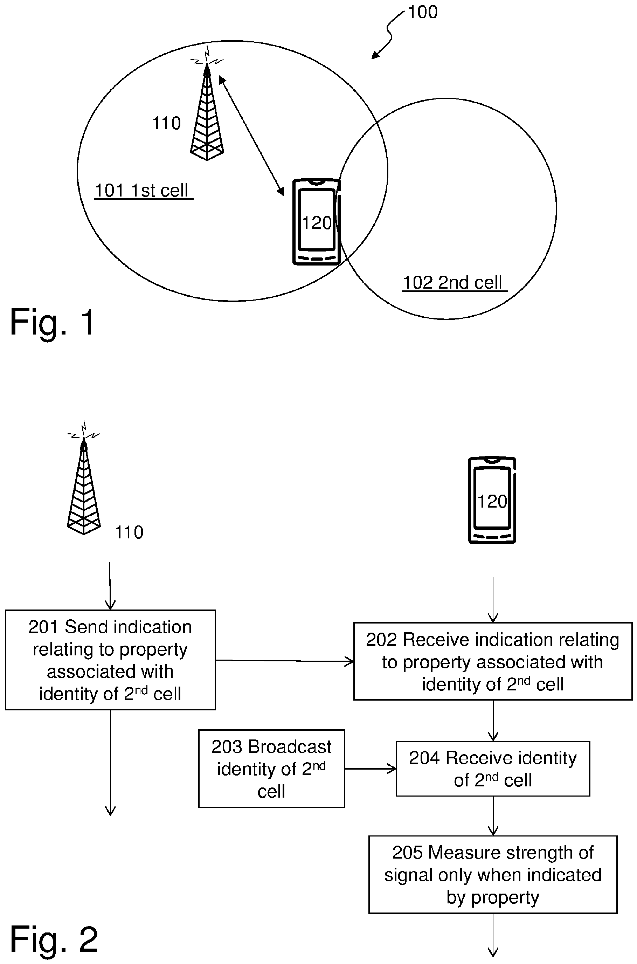

**Figure 1** depicts an exemplifying **wireless communications system 100** in which embodiments herein may be implemented. In this example, the wireless communications system 100 is an LTE system. In other examples, the wireless communication system may be any 3GPP wireless communication system, such as a Universal Mobile Telecommunication System (UMTS), Wideband Code Division Multiple Access (WCDMA) network, a Global System for Mobile communication (GSM) or the like. The wireless communication system 100 may even be an evolution of any one of the aforementioned systems or a combination thereof.

The wireless communication system 100 comprises **a radio network node 110.** As used herein, the term "radio network node" may refer to a Base Station (BS), a Base Transceiver Station (BTS), a Radio Base Station (RBS), Remote Radio Unit (RRU), an access point, a NodeB in so called Third Generation (3G) networks, evolved Node B, eNodeB or eNB in Long Term Evolution (LTE) networks, or the like. In UMTS Terrestrial Radio Access Network (UTRAN) networks, the term "radio network node" may also refer to a Radio Network Controller. Furthermore, in Global System for Mobile Communications (GSM) EDGE Radio Access Network (GERAN), where EDGE is short for Enhanced Data rates for GSM Evolution, the term "radio network node" may also refer to a Base Station Controller (BSC).

The radio network node 110 may operate **a first cell 101**, such as a macro cell, a micro cell, a pico cell, a femto cell etc.

Furthermore, **a wireless device 120** is located in the first cell 101. Expressed differently, the wireless device 120 may be associated with the first cell 101. This means that the wireless device 120 may be connected to, or served by the first cell 101, or the wireless device 120 may camp on the first cell 101.

As used herein, the term "wireless device" may refer to a user equipment, a subscriber unit, mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device, a sensor device equipped with radio communication capabilities or the like. The sensor may be any kind of weather sensor, such as wind, temperature, air pressure, humidity etc. As further examples, the sensor may be a light sensor, an electronic switch, a microphone, a loudspeaker, a camera sensor etc. Sometimes, the term "user", or "subscriber", may be used to refer to the wireless device.

Furthermore, the wireless communication system 100 comprises **a second cell 102.** The second cell 102 may be operated by the radio network node 110 or by a further radio network node (not shown). The second cell 102 is neighbouring to the first cell 101.

The radio network node 110 may manage a Neighbour Relation Table (NRT) or the like. The NRT may include an identity of the second cell 102. This means that the first and second cells 101, 102 are so called neighbouring cells.

As an example relating to LTE, the radio network node 110 hosts a so called Automatic Neighbour Relation (ANR) function. The ANR function builds and manages the NRT, which describes cells operated by the radio network node or cells located close to these cells, i.e. neighbouring cells. Various properties of the cells may be included in the NRT. For example, frequency, ECGI, size etc.

**Figure 2** illustrates an exemplifying method according to embodiments herein when implemented in the wireless communication system 100 of Figure 1. Thus, the wireless device 120 performs a method for managing a measurement of a strength of a reference signal identified by an identity of the second cell 102 neighbouring to the first cell 101. Also, this means that the radio network node 110 performs a method for enabling the wireless device 120 to manage a measurement of the strength of the reference signal.

As mentioned, the wireless device 120 is connected to or camps on the first cell 101. The first cell 101 is operated by the radio network node 110

The following actions may be performed in any suitable order.

### Action 201

In order to make the wireless device 120 aware of a property associated with the identity of the second cell 102, the radio network node 110 sends, to the wireless device 120 connected to or camping on the first cell 101, an indication relating to a property associated with the identity of the second cell 102, whereby the wireless device 120 performs the measurement only when the property indicates that the wireless device 120 is to perform the measurement of the strength of the reference signal.

The indication relating to the property may be sent to the radio network node 110 via broadcast signalling or dedicated signalling. For example, system information blocks, such as SIB4 to SIB8, may be used for broadcast signalling and rrcConnectionReconfiguration message may be used for dedicated signalling. The property may relate to possible outcome, e.g. long term and/or short term, of a handover or a reselection towards the second cell 102.

For example in connection with the first embodiments, the radio network may also send the CSG identity, or CSG ID, of the second cell 102 using dedicated or broadcast signalling as mentioned above.

The identity of the second cell 102 may comprise a Physical Cell Identity (PCI), a Location Area Code (LAC) or the like.

### Action 202

When action 201 has been performed, the wireless device 120 receives the indication from the radio network node 110. Now that the indication has been received by the wireless device 120, the wireless device may as in action 205 take advantage thereof such as to prevent unnecessary measurements, measurement reports and/or the like. As an example, the wireless device 120 may receive a list of indications relating to properties for each PCI of a set of neighbouring cells. This means that each indication of the list may be associated with a respective PCI corresponding to a respective neighbouring cell of the set of neighbouring cells. The set of neighbouring cells may include the second cell 102. As an example, a portion of the above mentioned NRT may be sent to the wireless device 120.

Also in connection with the first embodiments, the property may indicate that the second cell 102 is a macro cell, a micro cell, an open CSG cell or a hybrid CSG cell or the like. A hybrid CSG cell refers to a CSG cell to which access is granted for both CSG members and non-members, where e.g. members may be prioritized, e.g. in terms of granted bit rate, number of members vs. non-members, etc, over non-members.

### Action 203

The identity of the second cell 102 is broadcast. In some examples, when the second cell 102 is operated by the radio network node 110, the radio network node 110 broadcasts the identity of the second cell 102, e.g. in the form of a Primary Synchronization Signals (PSS) and a Secondary Synchronization Signals (SSS). In other examples, the further radio network node, not shown as mentioned above, may broadcast the identity of the second cell 102 in the same manner using a PSS and a SSS.

### Action 204

Hence, e.g. by reading the PSS and SSS, the wireless device 120 receives the identity of the second cell 102. This means that the identity of the second cell 102 may be received by reading one or more synchronization signals.

### Action 205

Thanks to that action 202 has been performed, the wireless device 120 is able to measure the strength of the reference signal identified by the identity of the second cell 102, only when the property or the CSG identity (if sent in 201) indicates that the wireless device 120 is to perform the measurement on the reference signal.

The measurement of the strength of the reference signal may comprise measuring one or more of RSRP (Reference Signal Received Power), Received Signal Strength Indicator (RSSI), RSRQ (Reference Signal Received Quality), Received Signal Code Power (RSCP) CPICH-Ec/No (Common Pilot Channel in UMTS and some other CDMA communications systems, Ec energy per chip over No - the total received power density excluding CPICH of own cell) of the reference signal. Expressed differently, the measuring is a measurement on the identity of the second cell 102, e.g. a PCI measurement.

In this manner, a number of physical layer measurements, such as the measurement of the strength of the reference signal, on cells, e.g. the second cell 102, in connection with handover and/or cell reselection is reduced.

Moreover, since no measurement is performed there will be no measurement report to the radio network node 110. Thus, the radio network node 110 will not send a Radio Resource Control (RRC) configuration message. As a result, processing and signalling in the radio network node 110 is reduced.

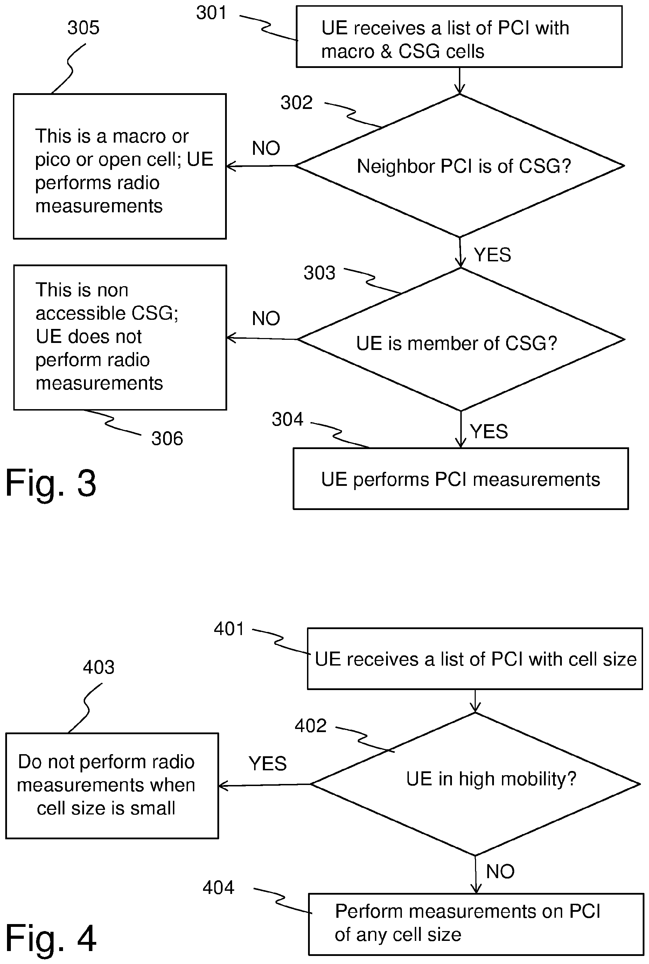

In some examples, this action may be preceded by an action of analysing, or checking, whether the property indicates that the measurement shall be performed. The analysis may be performed in different manners for the first and second embodiments as is described below and also with reference to Figures 3 and 4.

According to the first embodiments, the property may relate to accessibility of the second cell 102. Then, the wireless device 120 may perform the measurement of the strength of the reference signal only when the property indicates that the second cell 102 is accessible by the wireless device 120.

In some examples of the first embodiments, the wireless device 120 may also receive a CSG identity of the second cell 102 as indicated above.

See also Figure 3.

According to the second embodiments, the property may relate to a size of the second cell 102. Then, the wireless device 120 may performs the measurement of the strength of the reference signal only when the size of the second cell 102 is greater than a threshold value for size of cell and when the wireless device 120 is in a high mobility state. See also Figure 4.

As a first example, the high mobility state may be determined by detecting a number of cell reselections of the wireless device 120 e.g. according to 3GPP TS 36.304. Then, the wireless device 120 is in the high mobility state when the number of cell reselections exceeds a threshold value for cell reselections, also e.g. as in 3GPP TS 36.304.

As a second example, the high mobility state may be that the wireless device 120 is in the high mobility state when a speed of the wireless device 120 is above a threshold value for setting the high mobility state. The speed of the wireless device 120 may be obtained from a Global Position System, GPS, unit of the wireless device 120 or by monitoring cells on which the wireless device 120 camps or connects in time.

The wireless device 120 may now again return to action 202 or to action 204 to repeatedly, e.g. at a regular or irregular time intervals, perform one or more of the actions described above.

**Figure 3** is an exemplifying flow chart of the method according to the first embodiments. The wireless device 120, denoted UE in Figure 3, may be connected to or camping on the radio network node 110. In this example, the identity of the second cell 102 is referred to as a PCI. Additionally, the second cell 102 is exemplified by a neighbouring cell. Moreover, the property is in this example a type of the neighbouring cell identified by the PCI. The type may indicate that the cell is a macro cell, a hybrid CSG cell or a closed CSG cell or the like.

Initially, when the wireless device 120 registers to one CSG HeNB, the operator would provide the SIM card of that wireless device 120 with some information about that HeNB, e.g. a CSG identity of the HeNB cell. In general, the wireless device 120 will be provisioned with a list of PCIs, CGIs and CSG IDs for all the accessible closed CSGs and for those Hybrid cells where the wireless device 120 is a member. Such information would be on white-list of the wireless device 120. According to some embodiments herein, the wireless device 120 may need to know the PCI of the cells where the wireless device 120 has access right or where the wireless device 120 is member. Such information could be transferred to the wireless device 120 in different ways e.g. via SIM card during HeNB deployment, together with CSG identity during broadcast or dedicated signalling.

In the first embodiments the wireless device 120 receives some additional information, e.g. CSG type (open, hybrid or closed) with/without CSG identity, of each PCI in its neighbourhood from the radio network node 110. Then, for each PCI the wireless device 120 reads the additional information, and if it is a CSG other than its own cell, the wireless device 120 will not make any measurement on that cell, e.g. the second cell 102. Otherwise, the wireless device 120 makes measurements on that cell.

In more detail, the following actions may be performed in any suitable order.

### Action 301

The wireless device 120 receives a list of PCIs with associated types of each respective PCI. In this manner, the wireless device is informed about which type the neighbouring cells have.

As an example, the list and associated type of cell may be received via one Information Elements (IE) of a System Information Block (SIB). In particular, SIB4 up to SIB8 may be used depending on the wireless communication system, e.g. LTE or Inter Radio Access Technology, holding the neighbour cell. Based on specification 3GPP 36.331, SIB4 is used for intra-frequency neighbours, SIB5 for inter-frequency neighbours, SIB6 for inter-RAT UMTS neighbours, SIB7 for inter-RAT GSM neighbours and SIB8 for inter-RAT CDMA neighbours.

As an example, for intra-frequency neighbour cells, type of cell (open, CSG, hybrid), cell size, and/or CSG identity may be sent together with PCI in the 'IntraFreqNeighbCellList' IE of SIB4.

Another way of forwarding is via dedicated signalling, such as via a rrcConnectionReconfguration message.

This action is similar to action 202.

### Action 302

When the wireless device 120 e.g. moves, or when radio conditions change, the wireless device 120 may detect, or receive, a PCI of a neighbouring cell. Then, the wireless device 120 checks if the detected PCI is associated with the type indicating a closed CSG cell.

### Action 303

This action is performed when the checking in action 302 confirms that the type indicates that the neighbour cell is a closed CSG cell. That is to say, "YES, the detected PCI is associated to a cell that is a closed CSG cell, or a hybrid CSG cell".

Then, in this action, the wireless device 120 further checks if the wireless device 120 is a member of the CSG cell.
When the wireless device 120 receives the list of PCI together with the CSG type, then the wireless device 120 would know the CSG cell that it has membership to based on one or more of:
- reading the CSG ID if present with the broadcasted PCI and CSG type; and
- via proximity detection.

Reading the CSG identity refers to that the wireless device 120 in action 301 also receives any existing CSG identities for each PCI in the list. In order to determine whether the wireless device 120 is a member of the CSG cell, the wireless device 120 may compare one of said any existing CSG identities of the detected PCI to the initially provided CSG identity, e.g. by reading the SIM card or the like.

According to some embodiments herein, there is provided manners of informing the wireless device 120 about whether the PCI of a neighbour cell is belongs to a CSG group which the wireless device 120 is a member of. One exemplifying manner is to send to the wireless device 120, in addition to the PCI and the CSG type of the neighbours, the CSG Identity of each PCI on that neighbour list.

Proximity detection refers to detection of that the wireless device 120 is in the vicinity of a CSG cell with which it has a membership. Proximity detection is done in order to allow the wireless device 120 to know its proximity to it's CSG HeNB that it has membership to. This detection is usually done when the wireless device 120 detects what is called HeNB fingerprint which could be a sort of a list of neighbour PCI and relative signal strengths detected when in proximity of the accessible closed or hybrid CSG cells. Another way of detecting HeNB proximity would be using a GPS (Global Positioning System) of the wireless device 120 and comparing GPS location with the HeNB geographical location.

### Action 304

This action is performed when the checking in action 303 confirms that the wireless device 120 is a member of the CSG cell. That is to say, "YES, the UE is a member of the CSG cell".

Therefore, the wireless device 120 then performs the PCI measurement(s).

This action is similar to at least parts of action 205.

### Action 305

In case action 302 results in the negative, i.e. the detected PCI is not associated to a CSG cell, then the wireless device 120 performs the PCI measurement(s).

### Action 306

In case action 303 results in the negative, i.e. the wireless device 120 is not a member of the associated CSG cell, then the wireless device 120 does not perform the PCI measurement(s).

As a summary of the first embodiments, the following may apply:
- If a CSG cell is identified and the PCI is not associated with a CSG the wireless device 120 has membership to then the wireless device 120 will not perform radio measurement of that cell.
- If a PCI corresponds to a macro cell then the wireless device 120 performs measurement on the cell identified by that PCI
- If the PCI belongs to a cell that is a closed or hybrid CSG and for which the wireless device 120 is member then the wireless device 120 performs radio measurements on the cell identified by the PCI as this might lead to a handover towards its own CSG cell.

Notably, in US20130109380, an enhanced NRT (Neighbor Relation Table) is built where in addition to the cell identity of each PCI, the information whether the cell is a CSG cell or not is included, amongst other additional information. The enhanced NRT is built via several means e.g. by using eNB Automatic Neighbour Relation (ANR) functionality where the wireless device 120 is asked via RRC dedicated message, rrconnectionreconfiguration, to report the ECGI of the reported PCI or by using OSS database where all information of each cell of the network are stored.

According to some examples herein, some information of such enhanced NRT is forwarded to the wireless device 120. In particular, with each PCI communicated to the wireless device 120, the cell type whether it is a macro or CSG type (open, hybrid or closed) represented by that PCI, is transmitted to the wireless device 120 as e.g. in action 201 and 203.

**Figure 4** is an exemplifying flow chart of the method according to the second embodiments. Again, the wireless device 120, denoted UE in Figure 4, may be connected to or camping on the radio network node 110. In this example, the identity of the second cell 102 is referred to as a PCI. Additionally, the second cell 102 is exemplified by a neighbouring cell. Moreover, the property is in this example a size of the neighbouring cell identified by the PCI. The size may for example be indicated as small, medium, large, very large or the like.

### Action 401

The wireless device 120 receives a list of PCIs with an associated respective cell size for each PCI in the list. In this manner, the wireless device is informed about sizes of the neighbouring cells.

The cell size, or the size of the cell, may follow a format adopted in TS36.423v11.5.0, where cell size is expressed by an information element (IE) as shown below:

| **IE/Group Name** | **Presence** | **Range** | **IE type and reference** | **Semantics description** | **Criticality** | **Assigned Criticality** |
|---|---|---|---|---|---|---|
| Cell Size | M | | ENUMERATED (verysmall, small, medium, large, ...) | | - | - |

This action is similar to action 202.

### Action 402

In order to take advantage of the information provided in action 401, the wireless device 120 checks whether it is in a so called high mobility state.

As an example, the high mobility state may be defined as in 3GPP TS 36.304 "LTE; EUTRA; UE procedures in idle mode", in which the wireless device 120 is stated to be in high mobility if number of cell reselection during a period of time exceeds a certain threshold.

### Action 403

If action 402 indicates that the wireless device 120 is in high mobility, then the wireless device 120 does not perform the PCI measurement(s) if the cell size is small.

### Action 404

In contrast to action 403, the wireless device 120 performs the PCI measurement(s) irrespectively of cell size since the wireless device is not in the high mobility state.

At this point, in further examples, the first embodiment may be applied in order to prevent the wireless device 120 to perform the PCI measurement(s) on e.g. CSG cell with which it has no membership as is explained above in relation to Figure 3. Hence, in these further examples, the wireless device is aware of the indication relating to a property associated with the identity of the neighbouring cell, wherein the property relates to a type of the neighbouring cell as well as a size of the neighbouring cell.

Notably, in US20130084870, the network, in particular the eNB handles the handover based on target cell size. According to this document, handover prevention is achieved by that the eNB does not handover the UE to a cell with a small size. In order to that both the UE and the eNB have to perform a certain number of actions before the handover is prevented towards the cell with a small size. In more detail, the UE sends measurements reports about neighbour cells and the eNB selects target cell for handover based on target cell size and on UE speed.

Advantageously, according to at least the second examples, the wireless device 120 as well as the radio network node 110 may performs fewer actions than the certain number of actions required according to US20130084870, while at the same time avoiding handover to a cell with a small size when the wireless device 120 is in the high mobility state. As mentioned, this is realized according to at least some examples herein by transferring to the wireless device, the identity of and size of each neighbour cell.

Considering the second embodiments relating to the radio network node 110, the case in which the size of the neighbouring cell is sent via broadcast signalling is hereby disclaimed as not being part of the embodiments herein.
As a summary of the second embodiments, when the wireless device 120 is in high mobility state, for each PCI the wireless device 120 looks at the cell size then:
- If the cell represented by that PCI is of a small size it does not perform measurements on it;
- Otherwise the wireless device 120 performs the PCI measurement.

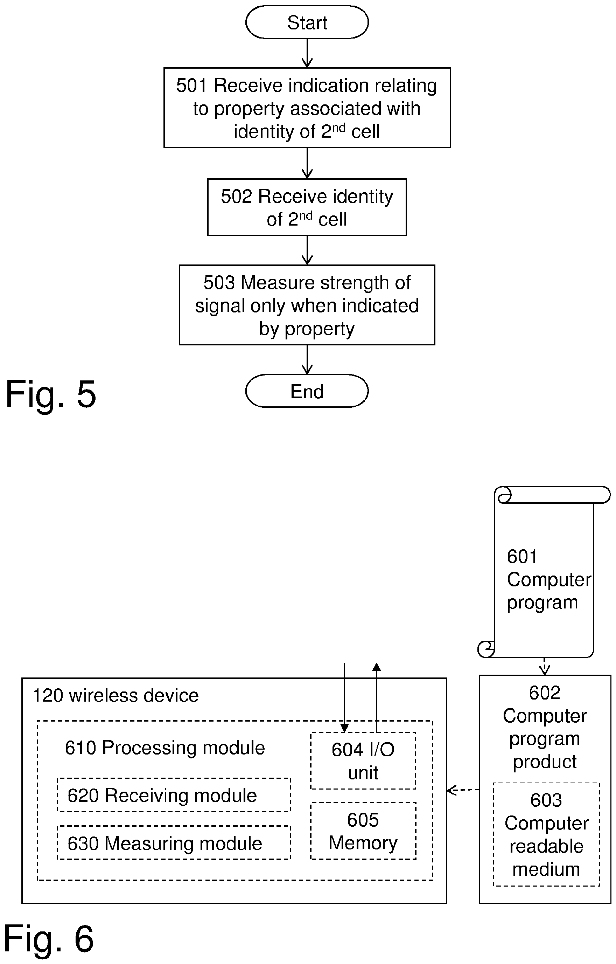

In **Figure 5**, an exemplifying, schematic flowchart of the method in the wireless device 120 is shown. As mentioned, the wireless device 120, being connected to or camping on the first cell 101, performs a method for managing a measurement of a strength of a reference signal identified by an identity of the second cell 102 neighbouring to the first cell 101.

As mentioned, the first cell 101 is operated by the radio network node 110. The identity of the second cell 102 may be received by reading one or more synchronization signals. The identity of the second cell 102 may comprise a Physical Cell Identity, a Location Area Code or the like.

The following actions may be performed in any suitable order.

### Action 501

The wireless device 120 receives receiving 202, from the radio network node 110, an indication relating to a property associated with the identity of the second cell 102.

As mentioned, the indication relating to the property may be received via broadcast signalling or dedicated signalling.

This action is similar to action 202.

### Action 502

The wireless device 120 receives 204 the identity of the second cell 102. This action is similar to action 204.

### Action 503

The wireless device 120 measures, e.g. performs a measurement of, the strength of the reference signal identified by the identity of the second cell 102, only when the property indicates that the wireless device 120 is to perform the measurement on the reference signal. The measurement of the strength of the reference signal may comprise measuring one or more of RSRP, RSRQ, RSSI, RSCP, CPICH-Ec/No of the reference signal.

As mentioned according to the first embodiments, the property may relate to accessibility of the second cell 1 02. Then, the wireless device 120 may perform the measurement of the strength of the reference signal only when the property indicates that the second cell 1 02 is accessible by the wireless device 120. In some examples of the first embodiments, the wireless device 120 may receive a CSG identity of the second cell 1 02.

As mentioned according to the second embodiments, the property may relate to a size of the second cell 102. Then, the wireless device 120 may performs the measurement of the strength of the reference signal only when the size of the second cell 1 02 is greater than a threshold value for size of cell and when the wireless device 120 is in a high mobility state.

This action is similar to action 205.

With reference to **Figure 6**, a schematic block diagram of the wireless device 120 is shown. The wireless device 120 is configured to perform the methods in Figure 2, 3, 4 and/or 5. Thus, the wireless device 120, being connected to or camping on the first cell 101, is configured to manage a measurement of a strength of a reference signal identified by an identity of a second cell 102 neighbouring to the first cell 101.

As mentioned, the first cell 101 is operated by the radio network node 110.

According to some examples herein, the wireless device 120 may comprise **a processing module 610.** In further examples, the processing module 610 may comprise one or more of a **receiving module 620** and a measuring module 630.

The wireless device 120, the processing module 610 and/or the receiving module 620 is configured to receive the identity of the second cell 102.

Furthermore, the wireless device 120, the processing module 610 and/or the receiving module 620 is configured to receive, from the radio network node 110, an indication relating to a property associated with the identity of the second cell 1 02.

The wireless device 120, the processing module 610 and/or the measuring module 630 is configured to measure the strength of the reference signal identified by the identity of the second cell 102, only when the property indicates that the wireless device 110 is to perform the measurement on the reference signal.

According to the first embodiments, the property may relate to accessibility of the second cell 102, wherein the wireless device 120 is configured to perform the measuring of the strength of the reference signal only when the property indicates that the second cell 102 is accessible by the wireless device 120.

In some examples of the first embodiments, the wireless device 120 may be configured to receive a CSG identity of the second cell 102.

According to the second embodiments, the property may relate to a size of the second cell 102, wherein the wireless device 120 is configured to measure the strength of the reference signal only when the size of the second cell 102 is greater than a threshold value for size of cell and when the wireless device 120 is in a high mobility state.

Further, the indication relating to the property of the second cell 102 may be received via broadcast signalling or dedicated signalling.

Again, the identity of the second cell 102 may comprise a Physical Cell Identity, a Location Area Code or the like.

The identity of the second cell 102 may be received by reading one or more synchronization signals.

The wireless device 120 may be configured to measure the strength of the reference signal in terms of one or more of RSRP, RSRQ, RSSI, RSCP, CPICH-Ec/No of the reference signal.

The wireless device 120 may further comprise **an Input/output (I/O) unit 604** configured to send and/or receive the indication relating to the property associated with the identity of the second cell 102 and/or other messages, indications and the like as described herein. The I/O unit 604 may comprise the receiving module 620, a transmitter and/or a receiver.

Furthermore, the wireless device 120 may comprise **a memory 605** for storing software to be executed by, for example, the processing module when the processing module is implemented as a hardware module comprising at least one processor or the like.

Figure 6 also illustrates software in the form of **a computer program 601**, comprising computer readable code units which when executed on the wireless device 120 causes the wireless device 120 to perform the method according to Figure 2, 3, 4 and/or 5.

Finally, Figure 6 illustrates **a computer program product 602**, comprising **computer readable medium 603** and the computer program 601 as described directly above stored on the computer readable medium 603.

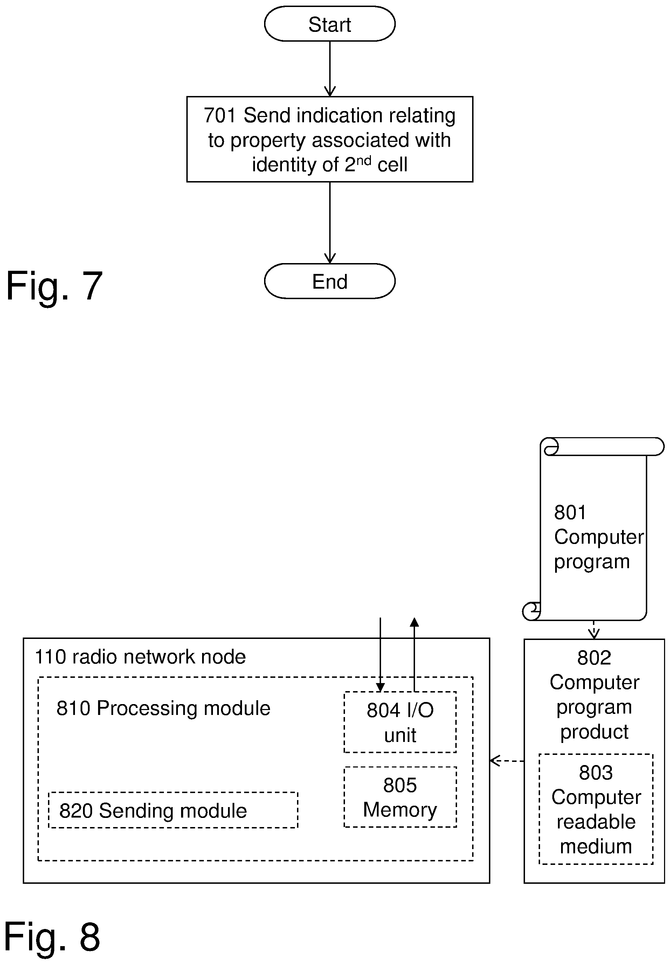

In **Figure 7**, an exemplifying, schematic flowchart of the method in the radio network node 110 is shown. As mentioned, the radio network node 110 performs a method for enabling the wireless device 120 to manage a measurement of a strength of a reference signal identified by an identity of the second cell 102 neighbouring to the first cell 101.

As mentioned, the first cell 101 is operated by the radio network node 110.

The following actions may be performed in any suitable order.

### Action 701

The radio network node 110 sends, to the wireless device 120 located in the first cell 101, an indication relating to a property associated with the identity of the second cell 102, whereby the wireless device 120 performs the measurement only when the property indicates that the wireless device 120 is to perform the measurement of the strength of the reference signal.

As mentioned, the indication relating to the property of the second cell 102 may be sent via broadcast signalling or dedicated signalling. The identity of the second cell 102 may comprise a Physical Cell Identity, a Location Area Code or the like.

According to the first embodiments, the property may relate to accessibility of the second cell 102, whereby the measurement of the strength of the reference signal is performed only when the property indicates that the second cell 102 is accessible by the wireless device 120.

In some examples of the first embodiments, the radio network node 110 may send a CSG identity of the second cell 102,

According to the second embodiments, the property may relate to a size of the second cell 102, whereby the measurement of the strength of the reference signal is performed only when the size of the second cell 1 02 is greater than a threshold value for size of cell and when the wireless device 120 is in a high mobility state.

This action is similar to action 201.

With reference to **Figure 8**, a schematic block diagram of the radio network node 110 is shown. The radio network node 110 is configured to perform the methods in Figure 2, 3, 4 and/or 7. Thus, the radio network node 110 is configured to enable a wireless device 120 to manage a measurement of a strength of a reference signal identified by an identity of a second cell 102.

As mentioned, the first cell 101 is operated by the radio network node 110.

According to some examples herein, the radio network node 110 may comprise **a processing module 810.** In further examples, the processing module 810 may comprise **a sending module 820.**

The radio network node 110, the processing module 810 and/or the sending module 820 is configured to send, to the wireless device 120 located in the first cell 101, an indication relating to a property associated with the identity of the second cell 1 02.

As mentioned according to the first embodiments, the property may relate to accessibility of the second cell 102. In some examples of the first embodiments, the radio network node 110 may be configured to send a CSG identity of the second cell 1 02.

As mentioned according to the second embodiments, the property may relate to a size of the second cell 102.

Further, the indication relating to the property of the second cell 102 may be sent via broadcast signalling or dedicated signalling.

Again, the identity of the second cell 102 may comprise a Physical Cell Identity, a Location Area Code or the like.

The radio network node 110 may further comprise **an Input/output (I/O) unit 804** configured to send and/or receive the indication relating to the property associated with the identity of the second cell 1 02 and/or other messages, indications
and the like as described herein. The I/O unit 804 may comprise the sending module 820, a transmitter and/or a receiver.

Furthermore, the radio network node 110 may comprise **a memory 805** for storing software to be executed by, for example, the processing module when the processing module is implemented as a hardware module comprising at least one processor or the like.

Figure 8 also illustrates software in the form of **a computer program 801**, comprising computer readable code units which when executed on the radio network node 110 causes the radio network node 110 to perform the method according to Figure 2, 3, 4 and/or 7.

Finally, Figure 8 illustrates **a computer program product 802**, comprising **computer readable medium 803** and the computer program 801 as described directly above stored on the computer readable medium 803.

As used herein, the term "processing module" may refer to a processing circuit, a processing unit, a processor, an Application Specific integrated Circuit (ASIC), a Field-Programmable Gate Array (FPGA) or the like. As an example, a processor, an ASIC, an FPGA or the like may comprise one or more processor kernels. In some examples, the processing module may be embodied by a software module or hardware module. Any such module may be a determining means, estimating means, capturing means, associating means, comparing means, identification means, selecting means, receiving means, transmitting means or the like as disclosed herein. As an example, the expression "means" may be a module, such as a determining module, selecting module, etc.

As used herein, the expression "configured to" may mean that a processing circuit is configured to, or adapted to, by means of software configuration and/or hardware configuration, perform one or more of the actions described herein.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), etc.

As used herein, the term "computer readable code units" may be text of a computer program, parts of or an entire binary file representing a computer program in a compiled format or anything there between.

As used herein, the terms "number", "value" may be any kind of digit, such as binary, real, imaginary or rational number or the like. Moreover, "number", "value" may be one or more characters, such as a letter or a string of letters. "number", "value" may also be represented by a bit string.

As used herein, the expression "in some embodiments" has been used to indicate that the features of the embodiment described may be combined with any other embodiment disclosed herein.

## Claims

1. A method, performed by a wireless device (120) connected to or camping on a first cell (101), for managing a measurement of a strength of a reference signal of a second cell (102), wherein the first cell (101) is operated by a radio network node (110), and wherein the method comprises:
receiving (202), from the radio network node (110), an indication relating to a property associated with an identity of the second cell (102) neighbouring to the first cell (101), wherein the property is a type of a cell;
receiving (204) the identity of the second cell (102); and
determining (302, 303) whether or not to measure (205) the strength of the reference signal identified by the identity of the second cell (102) as follows:
if the identity of the second cell (102) is associated to a type of a cell equal to a macro cell then performing the measurement (205) on the second cell (102),
if the identity of the second cell (102) is associated to a type of a cell equal to a closed or a hybrid Closed Subscriber Group, CSG, cell for which the wireless device (120) is a member then performing the measurement (205) on the second cell (102), or
if the identity of the second cell (102) is associated to a type of a cell equal to a closed or a hybrid Closed Subscriber Group, CSG, cell for which the wireless device (120) is not a member then not performing the measurement (205) on the second cell (102).

2. The method according to claim 1, wherein the property relates to accessibility of the second cell (102), wherein the receiving (202) of the indication further comprises receiving a Closed Subscriber Group, CSG, identity of the second cell (102), and wherein the measuring (205) of the strength of the reference signal is performed only when the property indicates that the second cell (102) is accessible by the wireless device (120), and/or
wherein the property relates to a size of the second cell (102), and wherein the measuring (205) of the strength of the reference signal is performed only when the size of the second cell (102) is greater than a threshold value for a size of a cell and when the wireless device (120) is in a high mobility state.

3. The method according to any one of claims 1-2, wherein the identity of the second cell (102) is received by reading one or more synchronization signals, and/or
the indication relating to the property is received via broadcast signalling or dedicated signalling, and/or
wherein the identity of the second cell (102) comprises a Physical Cell Identity or a Location Area Code.

4. The method according to any one of claims 1-3, wherein the measuring (205) of the strength of the reference signal comprises measuring one or more of: Reference Signal Received Power, RSRP; Reference Signal Received Quality, RSRQ; Received Signal Strength Indicator, RSSI; Received Signal Code Power, RSCP; and Common Pilot Channel, Ec energy per chip over No - the total received power density excluding CPICH of own cell, CPICH-Ec/No, of the reference signal.

5. A wireless device (120), connected to or camping on a first cell (101), configured to manage a measurement of a strength of a reference signal of a second cell (102), wherein the first cell (101) is configured to be operated by a radio network node (110), and wherein the wireless device (120) is configured to:
receive an identity of the second cell (102) neighbouring to the first cell (101);
receive, from the radio network node (110), an indication relating to a property associated with the identity of the second cell (102), wherein the property is a type of a cell; and
determine whether or not to measure the strength of the reference signal identified by the identity of the second cell (102) as follows:
if the identity of the second cell (102) is associated to a type of a cell equal to a macro cell then perform measurement on the second cell (102),
if the identity of the second cell (102) is associated to a type of a cell equal to a closed or a hybrid Closed Subscriber Group, CSG, cell for which the wireless device (120) is member then perform measurement on the second cell (102), or
if the identity of the second cell (102) is associated to a type of a cell equal to a closed or a hybrid Closed Subscriber Group, CSG, cell for which the wireless device (120) is not member then not perform measurement on the second cell (102).

6. The wireless device (120) according to claim 5, wherein the property relates to accessibility of the second cell (102), wherein the wireless device (120) is further configured to receive a Closed Subscriber Group, CSG, identity of the second cell (102), and wherein the wireless device (120) is further configured to perform the measuring of the strength of the reference signal only when the property indicates that the second cell (102) is accessible by the wireless device (120), and/or
wherein the property relates to a size of the second cell (102), wherein the wireless device (120) is further configured to measure the strength of the reference signal only when the size of the second cell (102) is greater than a threshold value for a size of a cell and when the wireless device (120) is in a high mobility state, and/or
wherein the identity of the second cell (102) is received by reading one or more synchronization signals, and/or
wherein the indication relating to the property is received via broadcast signalling or dedicated signalling, and/or
wherein the identity of the second cell (102) comprises: a Physical Cell Identity or a Location Area Code, and/or
wherein the wireless device (120) is further configured to measure the strength of the reference signal in terms of one or more of: Reference Signal Received Power, RSRP; Reference Signal Received Quality, RSRQ; Received Signal Strength Indicator, RSSI; Received Signal Code Power, RSCP; and Common Pilot Channel, Ec energy per chip over No - the total received power density excluding CPICH of own cell, CPICH-Ec/No, of the reference signal.

7. A computer program (601), comprising computer readable code units, which when executed on a wireless device (120) causes the wireless device (120) to perform the method according to any one of claims 1-4.

8. A computer program product (602), comprising: a computer readable medium (603) and a computer program (601) according to the preceding claim, stored on the computer readable medium (603).

## Patentansprüche

1. Verfahren, das von einer drahtlosen Vorrichtung (120) durchgeführt wird, die mit einer ersten Zelle (101) verbunden ist oder auf dieser verbleibt, zur Verwaltung einer Stärke eines Referenzsignals einer zweiten Zelle (102), wobei die erste Zelle (101) durch einen Funknetzwerkknoten (110) betrieben wird, und wobei das Verfahren Folgendes umfasst:
Empfangen (202) einer Anzeige von dem Funknetzwerkknoten (110), die sich auf eine Eigenschaft bezieht, die mit einer Kennung der zweiten Zelle (102) assoziiert ist, die an die erste Zelle (101) angrenzt, wobei die Eigenschaft eine Art einer Zelle ist;
Empfangen (204) der Kennung der zweiten Zelle (102); und
Bestimmen (302, 303), ob die Stärke des Referenzsignals, das durch die Kennung der zweiten Zelle (102) identifiziert ist, gemessen (205) werden soll oder nicht, wie folgt:
falls die Kennung der zweiten Zelle (102) mit einer Art von Zelle assoziiert ist, die einer Makrozelle gleicht, dann Durchführen der Messung (205) an der zweiten Zelle (102),
falls die Kennung der zweiten Zelle (102) mit einer Art von Zelle assoziiert ist, die einer geschlossenen oder einer hybriden Zelle mit geschlossener Teilnehmergruppe (Closed Subscriber Group, CSG) gleicht, für welche die drahtlose Vorrichtung (120) ein Mitglied ist, dann Durchführen der Messung (205) an der zweiten Zelle (102), oder
falls die Kennung der zweiten Zelle (102) mit einer Art von Zelle assoziiert ist, die einer geschlossenen oder einer hybriden Zelle mit geschlossener Teilnehmergruppe (CSG) gleicht, für welche die drahtlose Vorrichtung (120) kein Mitglied ist, dann kein Durchführen der Messung (205) an der zweiten Zelle (102).

2. Verfahren nach Anspruch 1, wobei die Eigenschaft sich auf eine Zugänglichkeit der zweiten Zelle (102) bezieht, wobei das Empfangen (202) der Kennung ferner ein Empfangen der Kennung der geschlossenen Teilnehmergruppe (CSG) der zweiten Zelle (102) umfasst, und wobei das Messen (205) der Stärke des Referenzsignals nur durchgeführt wird, wenn die Eigenschaft anzeigt, dass die zweite Zelle (102) für die drahtlose Vorrichtung (120) zugänglich ist, und/oder
wobei die Eigenschaft sich auf eine Größe der zweiten Zelle (102) bezieht, und wobei das Messen (205) der Stärke des Referenzsignals nur durchgeführt wird, wenn die Größe der zweiten Zelle (102) größer ist als ein Schwellenwert für eine Größe einer Zelle, und wenn die drahtlose Vorrichtung (120) sich in einem Hochmobilitätszustand befindet.

3. Verfahren nach einem der Ansprüche 1-2, wobei die Kennung der zweiten Zelle (102) durch ein Lesen von einem oder mehreren Synchronisationssignalen empfangen wird, und/oder die Anzeige, die sich auf die Eigenschaft bezieht, durch eine Übertragungssignalisierung oder eine dedizierte Signalisierung empfangen wird, und/oder
wobei die Kennung der zweiten Zelle (102) eine physikalische Zellidentität oder einen Ortsbereichscode umfasst.

4. Verfahren nach einem der Ansprüche 1-3, wobei das Messen (205) der Stärke des Referenzsignals ein Messen von einem oder mehreren umfasst von: Reference Signal Received Power (RSRP); Reference Signal Received Quality (RSRQ) Received Signal Strength Indicator (RSSI); Received Signal Code Power (RSCP); und einen Common Pilot Channel, Chipenergie Ec über No, eine gesamte empfangene Leistungsdichte ohne den CPICH der eigenen Zelle (CPICH-Ec/No) des Referenzsignals.

5. Drahtlose Vorrichtung (120), die mit einer ersten Zelle (101) verbunden ist oder auf dieser verbleibt, die dazu konfiguriert ist, eine Messung einer Stärke eines Referenzsignals einer zweiten Zelle (102) zu verwalten, wobei die erste Zelle (101) dazu konfiguriert ist, durch einen Funknetzwerkknoten (110) betrieben zu werden, und wobei die drahtlose Vorrichtung (120) zu Folgendem konfiguriert ist:
Empfangen einer Kennung der zweiten Zelle (102), die an die erste Zelle (101) angrenzt;
Empfangen einer Anzeige von dem Funknetzwerkknoten (110), die sich auf eine Eigenschaft bezieht, die mit der zweiten Zelle (102) assoziiert ist, wobei die Eigenschaft eine Art einer Zelle ist; und
Bestimmen, ob die Stärke des Referenzsignals, das durch die Kennung der zweiten Zelle (102) identifiziert ist, gemessen werden soll oder nicht, wie folgt:
falls die Kennung der zweiten Zelle (102) mit einer Art von Zelle assoziiert ist, die einer Makrozelle gleicht, dann Durchführen der Messung an der zweiten Zelle (102),
falls die Kennung der zweiten Zelle (102) mit einer Art von Zelle assoziiert ist, die einer geschlossenen oder einer hybriden Zelle mit geschlossener Teilnehmergruppe (CSG) gleicht, für welche die drahtlose Vorrichtung (120) ein Mitglied ist, dann Durchführen der Messung an der zweiten Zelle (102), oder
falls die Kennung der zweiten Zelle (102) mit einer Art von Zelle assoziiert ist, die einer geschlossenen oder einer hybriden Zelle mit geschlossener Teilnehmergruppe (CSG) gleicht, für welche die drahtlose Vorrichtung (120) kein Mitglied ist, dann kein Durchführen der Messung an der zweiten Zelle (102).

6. Drahtlose Vorrichtung (120) nach Anspruch 5, wobei die Eigenschaft sich auf eine Zugänglichkeit der zweiten Zelle (102) bezieht, wobei die drahtlose Vorrichtung (120) ferner dazu konfiguriert ist, eine Kennung einer geschlossenen Teilnehmergruppe (CSG) der zweiten Zelle (102) zu empfangen, und wobei die drahtlose Vorrichtung (120) ferner dazu konfiguriert ist, die Messung der Stärke des Referenzsignals nur durchzuführen, wenn die Eigenschaft anzeigt, dass die zweite Zelle (102) für die drahtlose Vorrichtung (120) zugänglich ist, und/oder
wobei die Eigenschaft sich auf eine Größe der zweiten Zelle (102) bezieht, wobei die drahtlose Vorrichtung (120) ferner dazu konfiguriert ist, die Stärke des Referenzsignals nur zu messen, wenn die Größe der zweiten Zelle (102) größer ist als ein Schwellenwert für eine Größe einer Zelle, und wenn die drahtlose Vorrichtung (120) sich in einem Hochmobilitätszustand befindet, und/oder
wobei die Kennung der zweiten Zelle (102) durch ein Lesen von einem oder mehreren Synchronisierungssignalen empfangen wird, und/oder
wobei die Anzeige, die sich auf die Eigenschaft bezieht, über eine Übertragungssignalisierung oder eine dedizierte Signalisierung empfangen wird, und/oder
wobei die Kennung der zweiten Zelle (102) Folgendes umfasst:
eine physikalische Zellenidentität oder einen Ortsbereichscode, und/oder
wobei die drahtlose Vorrichtung (120) ferner dazu konfiguriert ist, die Stärke des Referenzsignals hinsichtlich von einem oder mehreren zu messen von: Reference Signal Received Power (RSRP); Reference Signal Received Quality (RSRQ); Received Signal Strength Indicator (RSSI); Received Signal Code Power (RSCP); und einen Common Pilot Channel, Chipenergie Ec über No, eine gesamte empfangene Leistungsdichte ohne den CPICH der eigenen Zelle (CPICH-Ec/No) des Referenzsignals.

7. Computerprogramm (601), das computerlesbare Codeeinheiten umfasst, welche, wenn sie auf einer drahtlosen Vorrichtung (120) ausgeführt werden, die drahtlose Vorrichtung (120) dazu veranlassen, das Verfahren nach einem der Ansprüche 1-4 durchzuführen.

8. Computerprogrammprodukt (602), das Folgendes umfasst: ein computerlesbares Medium (603) und ein Computerprogramm (601) nach dem vorhergehenden Anspruch, das auf dem computerlesbaren Medium (603) gespeichert ist.

## Revendications

1. Procédé, effectué par un dispositif sans fil (120) connecté à ou séjournant sur une première cellule (101), pour gérer une mesure d'une intensité d'un signal de référence d'une deuxième cellule (102), dans lequel la première cellule (101) est exploitée par un noeud de réseau radio (110), et dans lequel le procédé comprend :
la réception (202), à partir du noeud de réseau radio (110), d'une indication concernant une propriété associée à une identité de la deuxième cellule (102) voisine de la première cellule (101), dans lequel la propriété est un type d'une cellule ;
la réception (204) de l'identité de la deuxième cellule (102) ; et
le fait de déterminer (302, 303) s'il faut ou non mesurer (205) l'intensité du signal de référence identifié par l'identité de la deuxième cellule (102) comme suit :
si l'identité de la deuxième cellule (102) est associée à un type d'une cellule égale à une macro cellule, alors effectuer la mesure (205) sur la deuxième cellule (102),
si l'identité de la deuxième cellule (102) est associée à un type d'une cellule égale à une cellule de groupe d'abonnés fermé, CSG, fermée ou hybride pour laquelle le dispositif sans fil (120) est un membre, alors effectuer la mesure (205) sur la deuxième cellule (102), ou
si l'identité de la deuxième cellule (102) est associée à un type d'une cellule égale à une cellule de groupe d'abonnés fermé, CSG, fermée ou hybride pour laquelle le dispositif sans fil (120) n'est pas un membre, alors ne pas effectuer la mesure (205) sur la deuxième cellule (102).

2. Procédé selon la revendication 1, dans lequel la propriété concerne une accessibilité de la deuxième cellule (102), dans lequel la réception (202) de l'indication comprend en outre la réception d'une identité de groupe d'abonnés fermé, CSG, de la deuxième cellule (102), et dans lequel la mesure (205) de l'intensité du signal de référence est effectuée seulement quand la propriété indique que la deuxième cellule (102) est accessible par le dispositif sans fil (120), et/ou dans lequel la propriété concerne une taille de la deuxième cellule (102), et dans lequel la mesure (205) de l'intensité du signal de référence est effectuée seulement quand la taille de la deuxième cellule (102) est supérieure à une valeur de seuil pour une taille d'une cellule et quand le dispositif sans fil (120) est dans un état de mobilité élevée.

3. Procédé selon l'une quelconque des revendications 1 à 2, dans lequel l'identité de la deuxième cellule (102) est reçue par la lecture d'un ou plusieurs signaux de synchronisation, et/ou
l'indication concernant la propriété est reçue via signalisation diffusée ou signalisation dédiée, et/ou dans lequel l'identité de la deuxième cellule (102) comprend une identité de cellule physique ou un code régional d'emplacement.

4. Procédé selon l'une quelconque des revendications 1 à 3, dans lequel la mesure (205) de l'intensité du signal de référence comprend la mesure d'un ou plusieurs parmi : une puissance reçue de signal de référence, RSRP ; une qualité reçue de signal de référence, RSRQ ; un indicateur d'intensité du signal reçu, RSSI ; une puissance de code du signal reçu, RSCP ; et une énergie par fragment, Ec, sur No de canal pilote commun - la densité de puissance reçue totale excluant le CPICH de la propre cellule, CPICH-Ec/No, du signal de référence.

5. Dispositif sans fil (120), connecté à ou séjournant sur une première cellule (101), configuré pour gérer une mesure d'une intensité d'un signal de référence d'une deuxième cellule (102), dans lequel la première cellule (101) est configurée pour être exploitée par un noeud de réseau radio (110), et dans lequel le dispositif sans fil (120) est configuré pour :
recevoir une identité de la deuxième cellule (102) voisine de la première cellule (101) ;
recevoir, à partir du noeud de réseau radio (110), une indication concernant une propriété associée à l'identité de la deuxième cellule (102), dans lequel la propriété est un type d'une cellule ; et
le fait de déterminer s'il faut ou non mesurer l'intensité du signal de référence identifié par l'identité de la deuxième cellule (102) comme suit :
si l'identité de la deuxième cellule (102) est associée à un type d'une cellule égale à une macro cellule, alors effectuer la mesure sur la deuxième cellule (102),
si l'identité de la deuxième cellule (102) est associée à un type d'une cellule égale à une cellule de groupe d'abonnés fermé, CSG, fermée ou hybride pour laquelle le dispositif sans fil (120) est un membre, alors effectuer la mesure sur la deuxième cellule (102), ou
si l'identité de la deuxième cellule (102) est associée à un type d'une cellule égale à une cellule de groupe d'abonnés fermé, CSG, fermée ou hybride pour laquelle le dispositif sans fil (120) n'est pas un membre, alors ne pas effectuer la mesure sur la deuxième cellule (102).

6. Dispositif sans fil (120) selon la revendication 5, dans lequel la propriété concerne une accessibilité de la deuxième cellule (102), dans lequel le dispositif sans fil (120) est configuré en outre pour recevoir une identité de groupe d'abonnés fermé, CSG, de la deuxième cellule (102), et dans lequel le dispositif sans fil (120) est configuré en outre pour effectuer la mesure de l'intensité du signal de référence seulement quand la propriété indique que la deuxième cellule (102) est accessible par le dispositif sans fil (120), et/ou dans lequel la propriété concerne une taille de la deuxième cellule (102), et dans lequel le dispositif sans fil (120) est configuré en outre pour mesurer l'intensité du signal de référence seulement quand la taille de la deuxième cellule (102) est supérieure à une valeur de seuil pour une taille d'une cellule et quand le dispositif sans fil (120) est dans un état de mobilité élevée, et/ou
dans lequel l'identité de la deuxième cellule (102) est reçue par la lecture d'un ou plusieurs signaux de synchronisation, et/ou
dans lequel l'indication concernant la propriété est reçue via signalisation diffusée ou signalisation dédiée, et/ou dans lequel l'identité de la deuxième cellule (102) comprend :
une identité de cellule physique ou un code régional d'emplacement, et/ou
dans lequel le dispositif sans fil (120) est configuré en outre pour mesurer l'intensité du signal de référence en termes d'un ou plusieurs parmi : une puissance reçue de signal de référence, RSRP ; une qualité reçue de signal de référence,
RSRQ ; un indicateur d'intensité du signal reçu, RSSI ; une puissance de code du signal reçu, RSCP ; et une énergie par fragment, Ec, sur No de canal pilote commun - la densité de puissance reçue totale excluant le CPICH de la propre cellule, CPICH-Ec/No, du signal de référence.

7. Programme informatique (601) comprenant des unités de code lisibles par ordinateur qui, quand elles sont exécutées sur un dispositif sans fil (120), amènent le dispositif sans fil (120) à réaliser le procédé selon l'une quelconque des revendications 1 à 4.

8. Produit de programme informatique (602) comprenant : un support lisible par ordinateur (603) et un programme informatique (601) selon la revendication précédente, stocké sur le support lisible par ordinateur (603).
